(19) Europäisches Patentamt
European Patent Office
Office européen des brevets

(11) Veröffentlichungsnummer: **0 064 972**
**B1**

# (12) EUROPÄISCHE PATENTSCHRIFT

(45) Veröffentlichungstag der Patentschrift: **16.03.88**

(51) Int. Cl.[4]: **C 08 G 63/18**, C 08 J 5/18, H 01 B 3/42

(21) Anmeldenummer: **82890072.0**

(22) Anmeldetag: **07.05.82**

(54) **Hochmolekularer aromatischer Polyester, Verfahren zur Herstellung von Folien aus diesen Polyestern und Folie aus diesen Polyestern, ein elektrischer Leiter mit einer Isolierung aus diesen Polyestern und Verfahren zur Herstellung solcher Isolierungen.**

(30) Priorität: **07.05.81 EP 81890076**
**09.12.81 AT 5278/81**

(43) Veröffentlichungstag der Anmeldung: **17.11.82 Patentblatt 82/46**

(45) Bekanntmachung des Hinweises auf die Patenterteilung: **16.03.88 Patentblatt 88/11**

(84) Benannte Vertragsstaaten: **AT BE CH DE FR GB IT LI NL SE**

(56) Entgegenhaltungen:
**EP-A-0 041 496**
**WO-A-82/00149**
**BE-A-650 440**
**DE-A-2 950 370**
**GB-A-1 122 201**
**US-A-3 546 165**

**CHEMICAL ABSTRACTS, Band 85, Nr. 18, November 1976, Seite 30, Nr. 124795n, Columbus, Ohio, USA. V.P.SIDOROVA et al.: "Physical properties of heat- resistant aromatic polymers"**
**CHEMICAL ABSTRACTS, Band 70, Nr. 4, 27. Januar 1969, Seiten 8,9, Nr. 12086r, Columbus, Ohio, USA, V.V. KORSHAK et al.: "9,9-Bis(4-hydroxyphenyl)fluorene polyarylates"**

**Die Akte enthält technische Angaben, die nach**

(73) Patentinhaber: **ISOVOLTA Österreichische Isolierstoffwerke Aktiengesellschaft, Industriezentrum- Süd, A-2351 Wiener Neudorf (AT)**

(72) Erfinder: **Rieder, Werner, Dr., Schrutkagasse 70, A-1130 Wien (AT)**
Erfinder: **Fehrle, Martin, Dr., Mozartstrasse 26, D-7120 Bietigheim- Bissingen (DE)**

(74) Vertreter: **Stampfer, Heinz, ISOVOLTA Österreichische Isolierstoffwerke AG Industriezentrum- Süd, A-2351 Wiener Neudorf (AT)**

(56) Entgegenhaltungen: (Fortsetzung)
**dem Eingang der Anmeldung eingereicht wurden und die nicht in dieser Patentschrift enthalten sind.**

**EP 0 064 972 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft einen hochmolekularen aromatischen Polyester bzw. Copolyester, bestehend im wesentlichen aus Kettengliedern der Formel

~~$-(O-X)-$~~ , $-(O-X-O-Y)-$,

der in diesen Kettengliedern als Glied X im wesentlichen die Strukturen

$X_1$ = 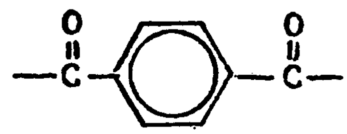 oder $X_2$ = 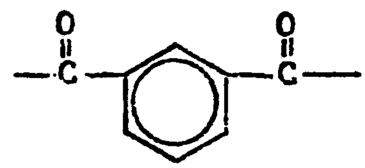

und als Glied Y im wesentlichen die Struktur

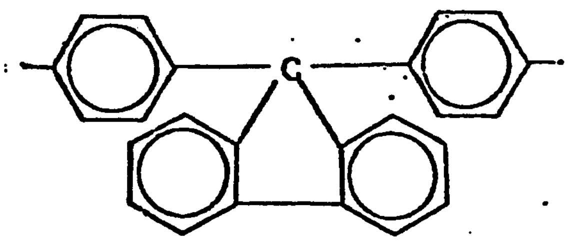

is aufweist.

Die Erfindung betrifft ferner ein Verfahren zur Herstellung von Filmen aus solchen Polyestern bzw. Copolyestern und Folien aus solchen Polyestern und Copolyestern.

Schließlich betrifft die Erfindung elektrische Leiter, die eine erfindungsgemäße Polyester bzw. Copolyester enthaltende elektrische Isolation aufweisen, sowie ein Verfahren zur elektrischen Isolierung von elektrischen Leitern mit Hilfe der erfindungsgemäßen Polyester oder Copolyester.

Polyester der eingangs genannten Art sind aus der US-A-3 546 165 bekannt. Bei den in dieser PS beschriebenen Polyestern wird die Höhe des Molekulargewichtes durch Angabe der Inherenten Viskosität gekennzeichnet, welche in üblicher Weise bei 30°C an einer Lösung von 0,5 g Polyester in 100 ml Lösungsmittel, bestehend aus 60 Gew.-% Phenol und 40 Gew.-% 1,1,2,2-Tetrachloräthan bestimmt wird. Die IV-Werte der in den Beispielen der US-PS hergestellten Polyester liegen in den meisten Fällen unter 1,0 dl/g. In den zwei Beispielen der US-PS, in welchen bei der Herstellung von Polyestern der eingangs genannten Art, d.h. von Polyestern auf Basis von 9,9-Bis(4-hydroxyphenyl)-fluoren höhere IV-Werte angegeben wurden, konnten diese bei einem Nacharbeiten der an sich sehr genau beschriebenen Beispiele nicht bestätigt werden: Die bei diesem Nacharbeiten erzielten IV-Werte lagen alle weit unter 1,0 dl/g.

Aus den gemäß den Vorschriften der US-A-3 546 165 herstellbaren Polyestern auf Basis von 9,9-Bis(4-hydroxyphenyl)-fluoren können nun keine gegossenen Filme oder Beschichtungen hergestellt werden, die hinsichtlich ihrer mechanischen Eigenschaften den üblichen Anforderungen der Praxis genügen. Insbesondere kann man aus ihnen keine gegossenen Filme oder Beschichtungen herstellen, die den für elektrische Isoliersysteme geforderten mechanischen und Isolationseigenschaften entsprechen.

Es wurde zwar gemäß Beispiel 2 der prioritätsälteren EP-B-0 054 563 (WO-A-82/00149) ein Polyester aus 9,9-Bis(4-hydroxyphenyl)-fluoren und einer äquimolaren Mischung von Isophthalsäuredichlorid und Terephthalsäuredichlorid hergestellt, der eine inherente Viskosität von 1,67 dl/g aufweist, doch wurden seine mechanischen Eigenschaften nicht bestimmt.

Die Erfindung, wie sie in den Ansprüchen gekennzeichnet ist, löst nun die Aufgabe, hochmolekulare Polyester oder Copolyester der eingangs genannten Art, bzw. daraus hergestellte Filme und/oder Beschichtungen mit solchen Eigenschaften anzugeben, die ihren Einsatz in der Praxis, insbesondere zur Herstellung von elektrischen Isolierungen erst möglich machen. Die Erfindung löst ferner die Aufgabe, elektrische Leiter mit Isolierungen mit verbesserten Eigenschaften, welche die erfindungsgemäßen Polyester oder Copolyester enthalten, bzw. ein vorteilhaftes Verfahren zur Herstellung solcher elektrischen Isolierungen anzugeben.

Die aus den erfindungsgemäßen Polyestern bzw. Copolyestern hergestellten Folien oder Beschichtungen haben eine Reihe von physikalischen Eigenschaften, die sie für den Einsatz in Elektroisoliersystemen besonders wertvoll machen. Diese vorteilhaften Eigenschaften bestehen in guten mechanischen Eigenschaften, einer hohen Zugfestigkeit, einer geringen Schrumpfneigung bei hoher Temperatur, einer geringen Flammenausbreitungsgeschwindigkeit, einer guten Haftfähigkeit an Metallen, guten Elektroisoliereigenschaften, die sich u.a. aus der hohen Durchschlagsfestigkeit und den geringen

dielektrischen Verlustfaktor ergeben, sowie in den günstigen Wasseraufnahmeeigenschaften.

Die Herstellung der Polyester und Copolyester erfolgt vorzugsweise mit Hilfe eines Zweiphasengrenzflächen-Polykondensationsverfahrens, bei welchem aus einer wässrigen Phase, bestehend aus einer Lösung aus dem Diphenol, Alkalihydroxid zur Bildung des Diphenolates in stöchimetrischem Verhältnis oder in geringem Überschuß sowie einem Phasentransferkatalysator, in einem Gemisch aus Wasser und einem organischen Lösungsmittel aus Lösungsvermittler, mit der organisch-flüssigen Phase, bestehend aus einer Lösung des Säurechlorids in einem chlorierten Lösungsmittel, eine feine Dispersion hergestellt wird, wobei das mit Hilfe des Phasentransferkatalysators in die organisch-flüssige Phase übergeführte Diphenolat mit dem Säurechlorid zur Bildung des Polyesters eine Polykondensationsreaktion eingeht. Ein besonders vorteilhaftes Verfahren dieser Art ist Gegenstand der älteren europäischen Patentanmeldung No. 81 890 076.3 vom 7. Mai 1981 (EP-A-0 041 496).

Die Anmelderin hat gefunden, daß die erfindungsgemäßen Polyester bzw. Copolyester vorteilhaft mit dem Diphenol 9,9-Bis-(4-hydroxyphenyl)-fluoren eines bestimmten Reinheitsbereiches sowie insbesondere mit Hilfe des vorstehend genannten Zweiphasengrenzflächen-Polykondensationsverfahrens hergestellt werden können. Kennzeichnend für den Reinheitsgrad des Diphenols ist z. B. sein auf einem Mikroheiztisch nach Kofler gemessener Schmelzbereich, der bei einem guten Reinheitsgrad z. B. 224 - 230°C und bei noch höherer Reinheit z. B. 229 - 231°C beträgt. Die Herstellung von Diphenolen nach Art von 9,9-Bis-(4-hydroxyphenyl)-fluoren mit hohem Reinheitsgrad wird vorteilhaft in der älteren DE-2 948 222A1 beschrieben bzw. ist auch Cegenständ der älteren Europäischen Patentanmeldung Nr. 81 890 075.5 (EP-A-0 065 060).

Bei dem erfindungsgemäßen Polyester bzw. Copolyester sind die Werte Inherenten Viskosität, gemessen bei 30°C in einer Lösung von 0,5 g Polyester in 100 ml Lösungsmittel, bestehend aus 60 Gew.-% Phenol und 40 Gew.-% 1,1,2,2-Tetrachloräthan, höher als 1,0 dl/g, vorzugsweise höher als 1,2 dl/g, wobei insbesondere im IV-Wert-Bereich von 1,0 bis 1,5 dl/g als Phthalsäurekomponenten zwischen 30 und 70 % Isophtalsäure und zwischen 70 und 30 % Terephthalsäure eingesetzt werden.

Bei IV-Werten von höher als 1,5 dl/g kann der erfindungsgemäße Polyester bzw. Copolyester mit jedem beliebigen Verhältnis von Isophthalsäure zu Terephthalsäure hergestellt werden. Dabei hat sich gezeigt, daß man beim Einsatz von Terephthalsäure allein zwar zu höheren Werten der Inherenten Viskosität gelangt, die erhaltenen Polyester aber nur mehr schwer löslich sind.

Die besonderen Eigenschaften der erfindungsgemäßen Polyester bzw. Copolyester kann man ferner durch die Eigenschaften von Folien kennzeichnen, die aus der Lösung des Polyesters in einem chlorierten organischen Lösungsmittel gegossen wurden. Zur Herstellung solcher Folien wird die Polyesterlösung zum Zwecke der Bildung eine Lösungsfilms auf eine glatte Unterlage gegossen, der Film getrocknet und danach als Folie von der Unterlage abgezogen, wonach die Folie schließlich zur Entfernung des Restlösungsmittels noch weiter getrocknet wird.

Die auf diese Weise hergestellten Folienproben weisen eine gemäß der Norm ASTM D 882-75 b gemessene Reißdehnung von mehr als 10 % und - bei höheren Werten der Inherenten Viskosität (IV-Werten) der eingesetzten Polyester - Reißdehnungswerte von mehr als 20 % auf. Dabei hat sich gezeigt, daß bei gleichen IV-Werten bei Polyestern auf Basis eines Gemisches aus Isophthalsäurechlorid und Terephthalsäurechlorid in einem Mischungsverhältnisbereich von 30 zu 70 Gew.-% bzw. meist in der Nähe des äquimolaren Verhältnisses die zugehörigen Folienreißdehnungswerte ein Maximum aufweisen.

Nachstehend sei die Abhängigkeit der Reißdehnung von den IV-Werten eines Polyesters auf Basis von 9,9-Bis-(4-hydroxyphenyl)-fluoren näher erläutert: Die Filmbildung beginnt etwa bei IV-Werten von 0,4 dl/g. Bei IV-Werten im Bereich von 1,0 bis 1,5 dl/g werden Folienreißdehnungswerte von 10 % und mehr erreicht, was bei einer Verwendung des Polyesters in Form von Beschichtungen für die meisten Anwendungszwecke ausreichend ist. Bei IV-Werten von mehr als 1,5 bzw. mehr als 1,5 dl/g werden zugehörige Folienreißdehnungswerte von mehr als 16 % bzw. mehr als 20 % erreicht, was für die Verwendung des Polyesters in Folienform für viele Anwendungen einen genügend hohen Wert darstellt.

Erfindungsgemäße Polyester können, wie bereits weiter oben erläutert wurde, in reproduzierbarer Weise auf Basis von Diphenolen hoher Reinheit, wie sie in Anspruch 6 durch deren Schmelzbereiche definiert sind, hergestellt werden. Dabei werden im allgemeinen - unter sonst gleichen Bedingungen - mit einem Diphenol höherer Reinheit höhere IV-Werte des synthetisierten Polyesters erzielt und aus Polyestern mit höheren IV-Werten erhält man höhere zugehörige Folienreißdehnungswerte.

Beim Polymerisationsprozeß hängt nun der erzielbare IV-Wert sehr stark von der Reinheit der eingesetzten Monomeren und Hilfsstoffe ab, d.h. bereits relativ geringe Reinheitsabweichungen wirken sich in relativ großen Abweichungen in den erhaltenen IV-Werten aus. Unter normalen Produktionsbedingungen werden Schwankungen der IV-Werte von $\pm 5$ % vom gewünschten Mittelwert wahrscheinlich nur schwer zu vermeiden sein. Da nun aber, wie die Anmelderin gefunden hat, für die erfindungsgemäßen Polyester im IV-Werte-Bereich zwischen 1,0 und 1,5 dl/g die zugehörigen Folienreißdehnungswerte stärker ansteigen als z. B. im Bereich zwischei 1,5 und 2,0 dl/g, folgt, daß sich die Reißdehnungswerte von insbesondere durch ein Gießverfahren aus den erfindungsgemäßen Polyesterm mit IV-Werten von höher als 1,5 dl/g, vorzugsweise höher als 1,8 dl/g hergestellten Folien, die für die meisten Folienanwendungen hoch genug sind, sich in Abhängigkeit von den IV-Werten nur wenig ändern. Das stellt einen zusätzlichen herstellungstechnischen Vorteil dar.

Erfindungsgemäße Polyester mit IV-Werten von 2,5 dl/g und mehr können nur mit extrem reinen Ausgangsstoffen erzeugt werden. Da eine Steigerung über diese IV-Werte hinaus meist keine wesentlichen

Verbesserungen der Eigenschaften der aus den Polyestern hergestellten Folien oder Beschichtungen mit sich bringt, andererseits aber mit steigenden IV-Werten im allgemeinen und insbesondere auch wegen der damit verbundenen Abnahme ihrer Löslichkeit eine Erschwerung der Verarbeitbarkeit der Polyester eintritt, sollten IV-Werte von 2,5 dl/g nicht wesentlich überschritten werden.

Die vorteilhaft durch ein Gießverfahren aus dem erfindungsgemäßen Polyester hergestellten erfindungsgemäßen Folien haben vorzugsweise eine Dicke zwischen 0,010 und 0,250 mm, vorzugsweise aber zwischen 0,020 und 0,150 mm. Solche Folien können vorteilhaft zur Herstellung eines elektrisch isolierenden Bandes dienen. Dieses Band kann dabei vorzugsweise aus einer zumindest an einer Oberflächenseite mit einer Kleberschicht versehenen Folie bestehen. Durch entsprechende Wahl der Kleberschicht kann das Band dabei vorteilhaft als Selbstklebeband ausgeführt werden.

Der erfindungsgemäße isolierte elektrische Leiter enthält in seiner elektrischen Isolierung eine den erfindungsgemäßen Polyester bildende Schicht. Diese Isolierung kann erfindungsgemäß dadurch hergestellt werden, daß der z. B. in Form eines Drahtes vorliegende elektrische Leiter mit einem elektrisch isolierenden Band vorteilhaft einem Selbstklebeband, welches aus der erfindungsgemäßen Folie aufgebaut ist, umwickelt wird. Die Isolierung kann aber auch vorteilhaft in Pulverform in einem Wirbelbett auf einen heißen elektrischen Leiter in Form einer elektrisch isolierenden Schicht aufgesintert werden.

Bei der Gelpermeations-Chromatographie des erfindungsgemäßen Polyesters wurde gefunden, daß bei Polyestern mit höheren IV-Werten das Chromatogram eine binodale Molekulargewichtsverteilung zeigt. Diese Polyester enthalten dann nicht nur einen hochmolekularen Anteil, sondern auch einen kleineren niedermolekularen Anteil von etwa 10 bis 20 %. Dieser niedermolekulare Anteil bewirkt, daß der erfindungsgemäße Polyester, der in seine. Erweichungsbereich bereits an sich gute Klebeeigenschaften aufweist, in seinen Klebeeigenschaften nach weiter verbessert wird.

Die Anmelderin hat ferner gefunden, daß der nach der Norm ASTM D 2863-77 gemessene Sauerstoffindex bei den erfindungsgemäßen Folien in vorteilhafter Weise höher liegt, als bei Folien aus einem Polyester der selben Art mit niedrigerem Molekulargewicht. Ein möglichst hoher Sauerstoffindex von Kunststoffen wird nämlich in zunehmenden Maße speziell in solchen Anwendungen verlangt, bei denen bei einer thermischen Zersetzung des eingesetzten Kunststoffes, wie sie bei einem Defekt oder Unfall, insbesondere aber auch im Falle eines Brandes eintreten kann, die Rauchentwichlung sowie die Giftigkeit der entstehenden Zersetzungsprodukte möglichst gering sein sollen.

Bei der Herstellung der erfindungsgemäßen Polyester werden im allgemeinen 9,9-Bis(4-hydroxyphenyl)-fluoren als Diphenol und iso/tere-Phtalsäure eingesetzt. Ein jeweils kleiner Teil dieser Diphenole und/oder Säurekomponenten kann nu jeweils vorteilhaft durch andere in ähnlicher Weise copolymerisierbarer Verbindungen ersetzt werden, ohne daß dadurch der Bereich der Erfindung verlassen wird. Beispiele für solche anderen copolymerisierbaren Verbindungen sind z. B. aus der US-PS-3 216 970 oder insbesondere auch aus der Deutschen Offenlegungsschrift 29 50 370 bekannt.

Das im nachfolgenden Beispiel 1 zur Herstellung der erfindungsgemäßen Polyester vorteilhaft verwendete Polykondensationsverfahren ist Gegenstand der älteren österreichischen Patentanmeldung 2425/50 oder der älteren europäischen Patentanmeldung 81 890 076.3 (EP-A-0 041 496). Die Polyesterherstellung gemäß den übrigen Beispielen erfolgt nach einem anderen Zweiphasengrenzflächen-Polymerisationsverfahren.

**Beispiel 1**

a) Herstellung der Diphenolat-Lösung:

264 g Natriumhydroxid werden in 5 l destilliertem Wasser gelöst und mit 2,5 l Isopropanol (techn. destilliert) versetzt. In dieser Mischung werden unter Erwärmen auf 70°C 1051 (3,0 Mol) 9,9-Bis (4-hydroxyphenyl)-1-fluoren mit einem Schmelzbereich von 228 - 230°C, gemessen an einem Mikroheiztisch nach Kofler, gelöst. Nach Abkühlung auf Raumtemperatur gibt man noch 1,0 Liter destilliertes Wasser hinzu.

b) Herstellung der Säurechlorid-Lösung:

304,5 g (1,5 Mol) iso-Phthaloylchlorid und 304,5 g. (1,5 Mol)tere-Phthaloylchlorid werden in 2,0 l 1,2-Dichloräthan, das über Calciumhydrid getrocknet und destilliert wurde, bei Raumtemperatur gelöst und unter Ausschluß von Feuchtigkeit aufbewahrt.

c) Herstellung der Katalysatorlösung:

34,5 g (0,15 Mol) Benzyl-triäthylammoniumchlorid werden bei Raumtemperatur in 200 ml destilliertem Wasser gelöst.

d) Polymersynthese:

In einem kühlbaren, mit einem hochtourigen Rührer, Thermometer und Dosierpumpe versehenen Reaktionsgefäß wird die Diphenolat-Lösung vorgelegt, mit 15 l destilliertem 1,2-Dichloräthan und der Katalysatorlösung versetzt und das Gemisch durch intensives Rühren dispergiert. Dieser Dispersion wird dann - unter weiterem intensiven Rühren - während 25 min mittels der Dosierpumpe die Säurechlorid-Lösung zudosiert, wobei die Temperatur der Dispersion, gegebengalls durch Kühlung, unter 40°C gehalten wird. Danach wird noch 45 min weitergerührt, wobei der die Viskosität der Dispersion ansteigt. Damit ist die Polykondensationsreaktion beendet und der gebildete Polyester in der organisch-flüssigen Phase der Dispersion gelöst.

e) Aufarbeitung:

Nach Überführung der Dispersion in einen geeigneten Behälter trennen sich die wässrige und die organische Phase innerhalb von 15 Minuten. Die wässrige, noch stark alkalische Phase wird verworfen, die organische hochviskose Phase 3 mal mit je 30 l Wasser gewaschen und zur Ausfällung des Polymers mit 30 l techn. Isopropanol unter starkem Rühren portionsweise versetzt, wobei der Polyester einen feinkörnigen Niederschlag bildet. Zur Entfernung von restlichem 1,2-Dichloräthan wird der Polyester mit weiteren 30 l Isopropanol behandelt, abzentrifugiert und in der Zentrifuge 2 mal mit je 10 l Wasser chloridfrei gewaschen. Die Trocknung des erhaltenen Polyester erfolgt im Umlufttrockenschrank unter Frischluftzufuhr bei 130°C zur Gewichtskonstanz innerhalb von 15 Stunden.

Ausbeute: 1383 g (96 % der Theorie)

Inherente Viskosität: 1,73 dl/g.

**Beispiel 2**

a) Herstellung der Diphenolat-Lösung:

264 g Natriumhydroxid werden in 5,0 l destilliertem Wasser gelöst und mit 3,0 l Dioxan versetzt. In dieser Mischung werden unter Erwärmen auf 70°C 1051 g (3,0 Mol) 9,9-Bis(4-hydroxyphenyl)-fluoren mit einem Schmelzbereich von 228 - 230°C, gemessen wie bei Beispiel 1, gelöst. Bei Raumtemperatur gibt man noch 1,0 l destilliertes Wasser zu.

Die Verfahrensschritte b - d erfolgen danach wie gemäß Beispiel 1.

Ausbeute: 1368 g (95 % der Theorie)

Inherente Viskosität: 2,3 dl/g.

**Beispiel 3**

Zur Herstellung einer Folie wird als Gießlösung eine 5,75 Gew.-%ige Lösung des gemäß Beispiel 2 synthetisierten Polyesters in 1,2-Dichloräthan hergestellt und aus ihr mittels einer Foliengießmaschine eine Folie von 0,040 mm Dicke hergestellt. Die nach der Norm ASTM D 882-75 b bestimmte Reißdehnung dieser Folie betrug 22 %.

Der Sauerstoffindex einer durch Handgießen aus derselben Gießlösung hergestellten Folie von 0,125 mm Dicke, bestimmt nach der Norm ASTM D 2863-77, Betrug 33 %.

**Beispiel 4**

Unter Verwendung des in Beispiel 2 beschriebenen Verfahrens wird die Synthese unter Einsatz von 2 Mol 9,9-Bis-(4-hydroxyphenyl)-fluoren mit einem Schmelzbereich von 229 - 231°C 2 Mol eines äquimolaren Gemisches aus iso-Phthaloylchlorid und tere-Phthaloylchlorid während 45 min durchgeführt. Der analog wie in Beispiel 1 aufgearbeitete Polyester hat eine Inherente Viskosität von 1,32 dl/g. Die Reißdehnung einer aus diesem Polyester wie nach Beispiel 3 gegossenen und ausgemessenen Folie einer Dicke von 0,025 mm beträgt 19 %.

**Beispiel 5**

Um die vorteilhaften Eigenschaften des erfindungsgemäßen Polyesters darzulegen, wird die Synthese gemäß Beispiel 5, bei der 9,9-Bis(4-hydroxyphenyl)-fluoren hoher Reinheit mit einem Schmelzbereich von 229 - 231°C eingesetzt wurde (Synthese C), mit den Ergebnissen zweier weiteren Synthesen verglichen, bei denen - unter sonst gleichen Bedingungen - das Diphenol 9,9-Bis(4-hydroxyphenyl)-fluoren mit niedrigeren Reinheitswerten eingesetzt wird. Bei der ersten dieser Vergleichssynthesen hat das eingesetzte Diphenol einen Schmelzbereich von 222-229°C (Synthese A) und bei der zweiten Vergleichssynthese einen Schmelzbereich von 224 - 230°C (Synthese B). Die für diese beiden Vergleichssynthesen und für die Synthese gemäß Beispiel 4 erhaltenen Werte der Inherenten Viskosität (IV-Wert) und der zugehörigen Folienreißdehnung sind in der nachstehenden Tabelle I angegeben.

**Tabelle I**

| Synthese | Diphenol Schmelzbereich | IV-Wert in dl/g | Reißdehnung in % ASTM D 882-75 b |
|---|---|---|---|
| A | 222 - 229°C | 0,71 | 10 |
| B | 224 - 230°C | 1,04 | 10 |
| C | 229 - 231°C | 1,32 | 19 |

Die Zahlen in der Tabelle I zeigen den starken Anstieg der IV-Werte der Polyester mit zunehmender Reinheit des bei der Polyestersynthese eingesetzten Diphenols, wobei der Grad der Reinheit durch die Höhe der unteren Grenztemperatur des Diphenol-Schmelzbereiches charakterisiert wird. Sie zeigen ferner den Anstieg der Folienreißdehnung mit ansteigenden IV-Werten.

**Beispiel 6**

In der nachstehenden Tabelle II sind für Folien einer Dicke von 0,025 mm aus Polyestern gemäß den Beispielen 1, 2, 4 und 5 sowie aus einem Polyester mit einem äquimolaren Verhältnis von iso/tere-Phthalsäure und einem IV-Wert von 0,88 dl/g einige wichtige Meßergebnisse angegeben. Dabei wurden die Dielektrizitätskonstante und der dielektrische Verlustfaktor nach DIN 53483 bestimmt. Die für die Folieneigenschaften wichtigen Werte für die Durchschlagsfestigkeit sind in Volt per mil. angegeben. Der Sauerstoffindex (limiting oxygen index = LOI) wurde nach ASTM D 2863-77 bestimmt. Die Bestimmung der Reißdehnung und der Zugfestigkeit erfolgte nach DIN 53455 und die des Elastizitätsmoduls nach DIN 53457.

Für die in $N_2$ durchgeführten Thermogravimetrischen Analysen (TGA) sind die zu 20 % Verlust gehörigen Temperaturen angegeben. Die Messung der Wasserabsorption erfolgte nach ASTM D-570-77.

**Tabelle II**

| Film mit IV-Wert | 0,71 | 0,88 | 1,04 | 1,32 | 1,67 | 2,30 |
|---|---|---|---|---|---|---|
| Diel.Konst. bei 1,0 kHz | 3,0 | - | 3,0 | 3,2 | 3,3 | 3,2 |
| Diel.Verl. Faktor bei 1,0 kHz | 0,006 | 0,006 | 0,005 | 0,006 | 0,003 | 0,004 |
| Durchschl. Fest. (Volt/mil.) | 2851 | 3741 | 3534 | 3318 | 2880 | 3728 |
| LOI | 22,5 | - | 22,5 | - | 25,5 | 26,5 |
| Reißdehnung in % | 10 | 9,5 | 10 | 19 | 24 | 24 |
| Zugfestigk. in kpsi | 11,9 | 9,7 | 13,3 | 12,9 | 18,0 | 19,1 |
| E-Modul in kpsi | 268 | 301 | 296 | 247 | 406 | 420 |
| TGA°C bei 20 % Verl.in $N_2$ | - | 530 | - | - | 550 | 615 |
| Wasserabs. % Gew. - Änderung | +0,37 | +0,66 | +0,36 | - | +0,67 | +0,32 |

Aus der vorstehenden Tabelle II sieht man, daß die Reißdehnung, der Sauerstoffindex (LOI), die Zugfestigkeit, das E-Modul und die Hochtemperaturbeständigkeit (siehe TGA-Analyse) bei höheren Inherenten Viskositäten sehr gute Werte erreichen.

**Patentansprüche**

1. Hochmolekularer Polyester, bestehend im wesentlichen aus Kettengliederm der Formel

$$-(O-X-O-Y)- ,$$

der in diesen Kettengliedern als Glied X im wesentlichen die Strukturen

$X_1$ = 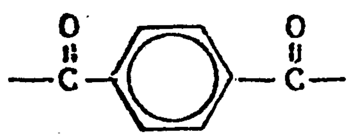 oder $X_2$ = 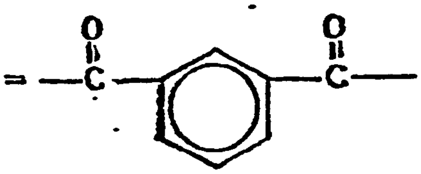

und als Glied Y im wesentlichen die Struktur

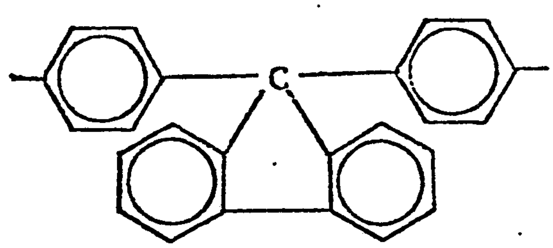

aufweist, dadurch gekennzeichnet, daß der Polyester eine Inherente Viskosität von höher als 1,0 dl/g, vorzugsweise höher als 1,2 dl/g, gemessen bei 30°C in einer Lösung von 0,5 g Polyester in 100 ml Lösungsmittel, bestsehend aus 60 Gew.-% Phenol und 40 Gew.-% 1,1,2,2 - Tetrachloräthan aufweist und daß bei einer Inhererred Viskosität im Bereich von 1,0 bis 1,5 dl/g zwischen 30 und 70 % der Kettenglieder als Glied X die Struktur $X_1$ und zwischen 70 und 30 % der Kettenglieder als Glied X die Struktur $X_2$ haben, ausgenommen ein Polyester mit einer Inherenten Viskosität von 1,67 dl/g, der aus 9,9-Bis (4-hydroxyphenyl)-fluoren und einer äquimolaren Mischung von Isophthalsäure-dichlorid und Terephthalsäuredichlorid gemäß Beispiel 2 des europ. Patentes Nr. 54563 hergastellt worden ist.

2. Hochmolekularer Polyester nach Anspruch 1, dadurch gekennzeichnet, daß eine Folie, gegossen aus einer Lösung dieses Polyesters in einem chlorierten organischen Lösungsmittel eine gemäß der Norm ASTM D 882-75b gemessene Reißdehnung von mindestens 10 %, vorzugsweise mindestens 20 % aufweist.

3. Hochmolekularer Polyester gemäß Anspruch 1 oder 2, dadurch gekennzeichnet, daß seine Inherente Viskosität höher als 1,5 dl/g, vorzugsweise höher als 1,8 dl/g ist.

4. Hochmolekularer Polyester nach Anspruch 3, dadurch gekennzeichnet, daß zwischen 30 und 70 % der Kettenglieder als Glied X die Struktur $X_1$ und zwischen 70 und 30 % der Kettenglieder als Glied X die Struktur $X_2$ haben.

5. Hochmolekularer Polyester nach einem der Ansprüche 1 bis 4, dadurch gekennzeichnet, daß er auf Basis von 9,9-Bis(4-hydroxyphenyl)-fluoren hergestellt ist, das einen auf einem Mikroheiztisch nach Kofler bestimmten Schmelzbereich aufweist, dessen untere Grenztemperatur mindetens 225°C, vorzugsweise jedoch mindestens 227°C, beträgt.

6. Hochmolekularer Polyester, bestehend im wesentlichen aus Kettengliedern der Formel

$$-(O-X-O-Y)-$$

der in diesen Kettengliedern als Glied X im wesentlichen die Strukturen

$X_1$ = 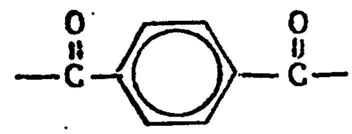 oder $X_2$ = 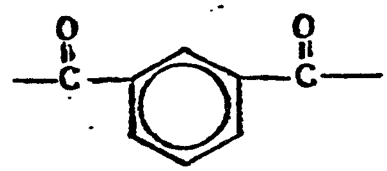

und als Glied Y im wesentlichen die Struktur

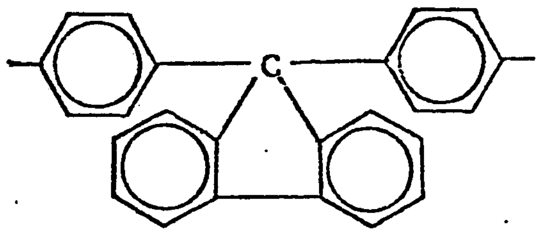

aufweist, dadurch gekennzeichnet, daß der Polyester eine Inherente Viskosität von höher als 1,0 dl/g. vorzugseise höher als 1.2 dl/g, gemessen bei 30°C in einer Lösung von 0.5 g Polyester in 100 ml Lösungsmittel, bestehend aus 60 Gew.-% Phenol und 40 Gew.-% 1,1,2,2 - tetrachloräthan aufweist und daß bei einer Inherenten Viskosität im Bereich von 1,0 bis 1,5 dl/g zwischen 30 und 70 % der Kettenglieder als Glied X die Struktur $X_1$ und zwischen 70 und 30 % der Kettenglieder als glied X die Struktur $X_2$ haben und daß ein kleiner Teil der Kettenglieder als Glied X und/oder Y Reste polykondensierbarer Verbindungen aufweist, die sich von den Strukturen $X_1$, $X_2$ und Y unterscheiden.

7. Folie aus einem Polyester, bestehend im wesentlichen aus Kettengliedern der Formel

$$-(-O-X-O-Y-)-$$

der in diesen Kettengliedern als Glied X im wesentlichen die Strukturen

$X_1$ = 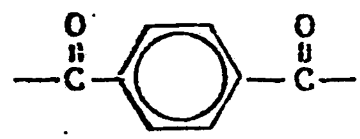 oder $X_2$= 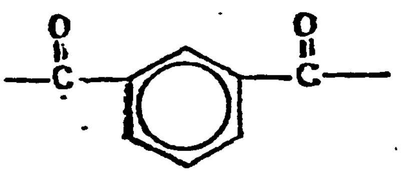

und als Glied Y im wesentlichen die Struktur

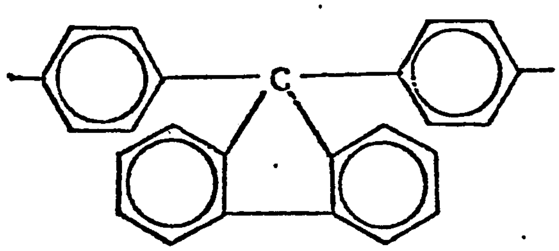

aufweist, dadurch gekennzeichnet, daß der Polyester eine Inherente Viskosität von höher als 1,0 dl/g, vorzugsweise höher als 1,2 dl/g, gemessen bei 30°C in einer Lösung von 0.5 g Polyester in 100 ml Lösungsmittel, bestehend aus 60 Gew.-% Phenol und 40 Gew.-% 1,1,2,2-tetrachloräthan, aufweist und daß bei einer Inherenten Viskosität im Bereich von 1,0 bis 1,5 dl/g zwischen 30 und 70 % der Kettenglieder als Glied X die Struktur $X_1$ und zwischen 70 und 30 % der Kettenglieder als Glied X die Struktur $X_2$ haben.

8. Folie nach Anspruch 7, dadurch gekennzeichnet, daß sie eine gemäß der Norm ASTM D 882-75b gemessene Reißdehnung von mindestens 10 %, vorzugsweise mindestens 20 % aufweist.

9. Folie gemäß Anspruch 7 oder 8, dadurch gekennzeichnet, daß die Inherente Viskosität des Polyesters höher als 1,5 dl/g, vorzugsweise höher als 1,8 dl/g ist.

10. Folie nach Anspruch 9, dadurch gekennzeichnet, daß im Polyester zwischen 30 und 70 % der Kettenglieder als Glied X die Struktur $X_1$ und zwischen 70 und 30 % der Kettenglieder als Glied X die Struktur $X_2$ haben.

11. Folie nach einem der Ansprüche 7 bis 10, dadurch gekennzeichnet, daß im Polyester ein kleiner Teil der Kettenglieder als Glied X und/oder Y Reste polykondensierbarer Verbindungen aufweist, die sich von den Strukturen X, $X_2$ oder Y unterscheiden.

12. Folie nach einem der Ansprüche 7 bis 11, dadurch gekennzeichnet, daß er auf Basis von 9,9-Bis(4-hydroxyphenyl)-fluoren hergstellt ist, das einen auf einem Mikroheiztisch nach Kofler bestimmten Schmelzbereich aufweist, dessen untere Grenztemperatur mindestens 225° C, vorzugsweise jedoch mindestens 227° C, beträgt.

13. Folie nach einem der Ansprüche 7 bis 12, dadurch gekennzeichnet, daß sie eine Dicke zwischen 0,010 und 0,250 mm und eine gemäß der Norm ASTM D 882-75b gemessene Reißdehnung von mindestens 16 %, vorzugsweise jeoch von mindestens 20 % aufweist.

14. Folie nach einem der Ansprüche 7 bis 13, dadurch gekennzeichnet, daß sie einen gemäß der Norm ASTM D 2863-77 bei 0,125 mm Foliebdicke gemessen Sauerstoffindex (oxygen index) von mindestens 31 %, vorzugsweise mindestens 33 % aufweist.

15. Folie nach einem der Ansprüche 7 bis 14, dadurch gekennzeichnet, daß sie zumindest an einer Oberflächenseite mit einer Kleberschicht versehen ist.

16. Verfahren zur Herstellung einer Folie gemäß einem der Ansprüche 7 bis 15, gekennzeichnet durch die Herstellung einer den Polyester enthaltenden Lösung mit einem niedrig-siedenden chlorierten organischen Lösungsmittel, durch Gießen der Lösung auf eine Unterlage zum Zwecke der Bildung eines Lösungsfilms auf dieser Unterlage, durch Trocknung dieses Films zum Zwecke der Abführung des größten Teiles des Lösungsmittels, durch Trennung des durch diese Trocknung in eine Folie übergeführten Films von der Unterlage und durch weitere Trocknung der Folie zum Zwecke der Entfernung des größten Teiles des noch verbliebenen lösungsmittels.

17. Elektrischer Leiter, dadurch gekennzeichnet, daß er eine elektrisch isolierende Schicht aus einem Polygemäß einem der Ansprüche 7 und 9 bis 12 enthält.

**Claims**

High-molecular polyester, consisting substantially of chain members of the Formula

$$-\!\!(\,O-X-O-Y\,)\!\!- \quad ,$$

which in these chain members as member X substantially has the structures

$X_1$ = 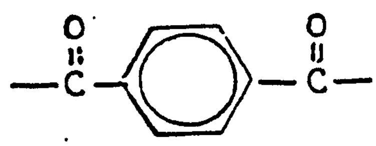 or $X_2$ = 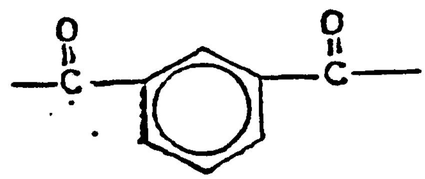

and as member Y substantially has the structure

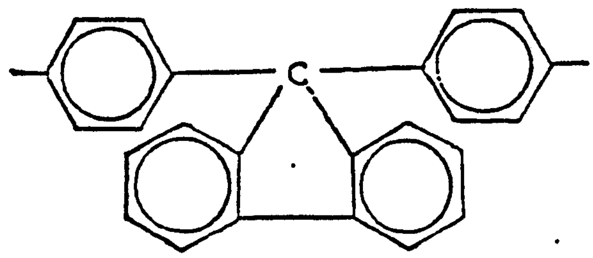

characterized in that the polyester has an inherent viscosity of greater than 1.0 dl/g, preferably greater than 1.2 dl/g, measured at 30°C in a solution of 0.5 g polyester in 100 ml solvent, consisting of 60 % -wt. phenol and 40 % - wt. 1,1,2,2,-tetrachloroethane, and that with an inherent viscosity in the range of 1.0 to 1.5 dl/g between 30 and 70 % of the chain members have as member X the structure $X_1$ and between 70 and 30 % of the chain members have as member X the structure $X_2$, with the exception of a polyester with an inherent viscosity of 1.67 dl/g, which is produced from 9,9-bis(4-hydroxyphenyl)-fluorene and an equimolar mixture of isophthalic acid dichloride and terephthalic acid dichloride.

2. High-molecular polyester according to Claim 1, characterized in that a sheet cast from a solution of this polyester in a chlorinated organic solvent has an elongation at break, measured according to the standard ASTM D 882-75b, of at least 10 %, preferably at least 20 %.

3. High-molecular polyester according to Claim 1 or 2, characterized in that its inherent viscosity is greater than 1.5 dl/g, preferable greater than 1.8 dl/g.

4. High-molecular polyester according to Claim 3, characterized in that between 30 and 70 % of the chain members have as member X the structure $X_1$ and between 70 and 30 % of the chain members have as member X the structure $X_2$.

5. High-molecular polyester according to one of Claims 1 to 4, characterized in that it is produced on the basis of 9,9-bis(4-hydroxy-phenyl)-fluorene, which has a melting range, determined on a Kofler micro-heating table, of which the lower threshold temperature is at least 225° C, preferably however at least 227° C.

6. High-molecular polyester, consisting substantially of chain members of the Formula

$-(O-X-O-Y)-$

which in these chain members as member X substantially has the structures

$X_1$ = 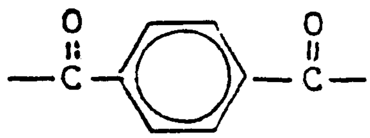 or $X_2$ = 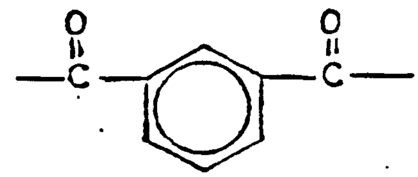

and as member Y substantially has the structure

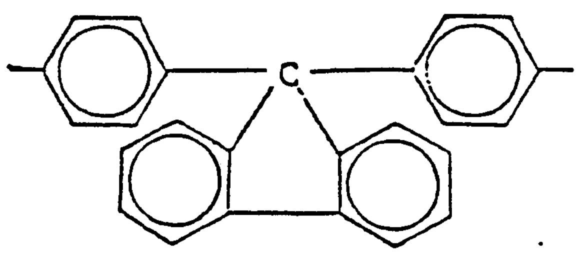

characterized in that the polyester has an inherent viscosity of greater than 1.0 dl/g, preferably greater than 1.2 dl/g, measured at 30°C in a solution of 0.5 g polyester in 100 ml solvent, consisting of 60 % -wt. phenol and 40 % -wt. 1,1,2,2 - tetrachloroethane, and that with an inherent visocity in the range of 1.0 to 1.5 dl/g between 30 and 70 % of the chain members have as member X the structure $X_1$ and between 70 and 30 % of the chain members have as member X the structure $X_2$ and that a small proportion of the chain members has as member X and/or Y radicals of polycondensable compounds, which differ from the structures $X_1$, $X_2$ and Y.

7. Sheet of a polyester, consisting substantially of chain members of the Formula

$-(O-X-O-Y)-$

which in these chain members as member X substantially has the structures

$X_1$ = 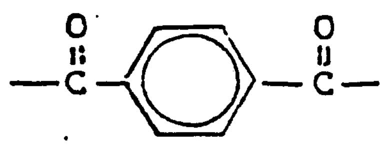 or $X_2$ = 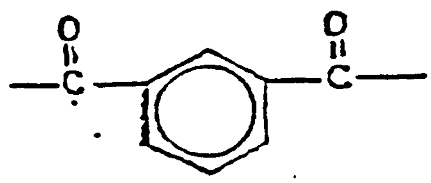

and as member Y substantially has the structure

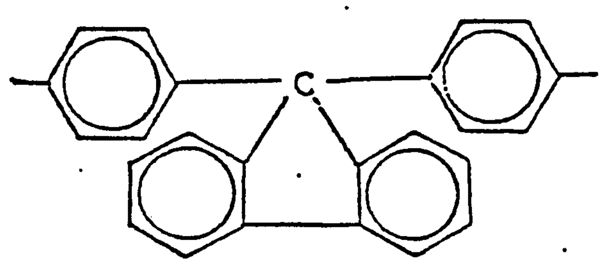

characterized in that the polyester has an inherent viscosity of greater than 1.0 dl/g, preferably greater than 1.2 dl/g, measured at 30°C in a solution of 0.5 g polyester in 100 ml solvent, consisting of 60 % -wt. phenol and 40 % -wt. 1,1,2,2-tetrachloroethane, and that with an inherent viscosity in the range of 1.0 to 1.5 dl/g between 30 and 70 % of the chain members have as member X the structure $X_1$ and between 70 and 30 % of the chain members have as member X the structure $X_2$.

8. Sheet according to Claim 7, characterized in that it has an elongation at break, measured according to the standard ASTM D 882-75b, of at least 10 %, preferably at least 20 %.

9. Sheet according to Claim 7 or 8, characterized in that the inherent viscosity of the polyester is greater than 1.5 dl/g, preferably greater than 1.8 dl/g.

10. Sheet according to Claim 9, characterized in that in the polyester between 30 and 70 % of the chain members have as member X the structure $X_1$ and between 70 and 30 % of the chain members have as member X the structure $X_2$.

11. Sheet according to one of Claims 7 to 10, characterized in that in the polyester a small proportion of the chain mebers has as member X and/or Y radicals of polycondensable compounds, which differ from the structures X, $X_2$ or Y.

12. Sheet according to one of Claims 7 to 11, characterized in that it is produced on the basis of 9,9-bis(4-hydroxyphenyl)-fluorene, which has a melting range, determined on a Kofler micro-heating table, the lower threshold temperature of which is at least 225° C, preferably however at least 227° C.

13. Sheet according to one of Claims 7 to 12, characterized in that it has a thickness between 0.010 and 0.250 mm and an elongation at break, measured according to the standard ASTM D 882-75b, of at least 16 %, preferably however at least 20 %.

14. Sheet according to one of Claims 7 to 13, characterized in that it has an oxygen index, measured according to the standard ASTM D 2863-77 at 0.125 mm sheet thickness, of at least 31 %, preferably at least 33 %.

15. Sheet according to one of Claims 7 to 14, characterized in that it is provided at least on one surface side with a layer of adhesive.

16. Method for the production of a sheet according to one of Claims 7 to 15, characterized by the production of a solution containing the polyester with a low-boiling chlorinated organic solvent, by pouring the solution onto a support for the purpose of the formation of a film of solution on this support, by drying this film for the purpose of removing the majority of the solvent, by separating the film, converted into a sheet through this drying, from the support and by further drying of the sheet for the purpose of removal of the majority of the solvent still remaining.

17. Electric conductor, characterized in that it contains an electrically insulating layer of a polyester of the same composition as that of the sheet according to one of Claims 7 and 9 to 12.

**Revendications**

1. Polyester de poids moléculaire élevé constitué essentiellement de motifs de formule:

$$-\!\!\left[\, O - X - O - Y \,\right]\!\!-$$

dont les éléments X présentent essentiellement la structure:

$X_1$ = 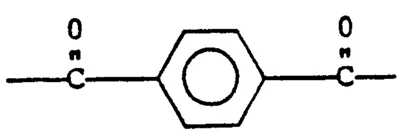 ou $X_2$ = 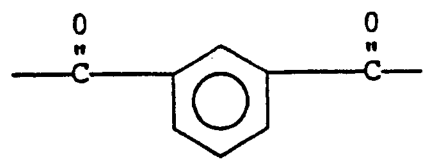

et les éléments Y présentent essentiellement la structure:

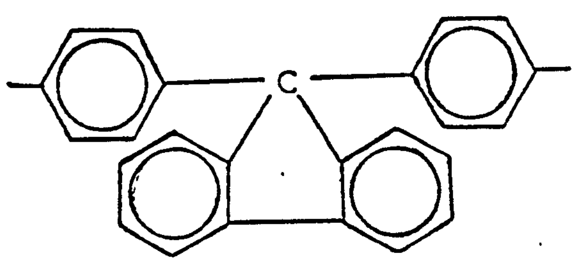

caractérisé en ce que le polyester présente une viscosité inhérente, mesurée à 30° C dans une solution de 0,5 g du polyester dans 100 ml de solvant constitué de 60 % en poids de Phenol et 40 % en poids de 1,1,2,2-tétrachloroéthane, supérieure à 1,0 dl/g, de préférence supérieure à 1,2 dl/g et en ce que pour une viscosité inhérente comprise entre 10 et 1,5 dl/g 30 à 70 % des éléments X présentent la structure $X_1$ et 70 à 30 % de ces élémentes X présentent la structure $X_2$ à l'exeption d'un polyester présentant une viscosité inhérente de 1,67 dl/g préparé à partir de 9,9-bis(4-hydroxy-phényl)-fluorène et d'un mélange équimoléculaire de dichlorure d'acide isophtalique et de dichlorure d'acide téréphtalique.

2. Polyester de poids moléculaire éléve selon la revendication 1, caractérisé en ce qu'une feuille obtenue par coulage d'une solution de ce polyester dans un solvant organique chloré présente un allongement à la rupture, mesuré selon la norme ASTM D 882-75b, d'au moins 10 %, de préférence d'au moins

3. Polyester de poids moléculaire élevé selon la revendication 1 ou 2, caractérisé en ce que sa viscosité inhérente est supérieure à 1,5 dl/g, de préférence supérieure à 1,8 dl/g.

4. Polyester de poids moléculaire élevé selon la revendication 3, caractérisé en ce que de 30 à 70 % des éléments X présentent la structure $X_1$ et de 70 à 30 % présentent la structure $X_2$.

5. Polyester de poids mmoléculire élevé selon l'une quelconque des revendications 1 à 4, caractérisé en ce qu'il est préparé à partir de 9,9-bis(4-hydroxyphényl)-fluorène présentant un intervalle de fusion, mésure selon la méthode de Kofler sur une micro-table chauffante, dont la limite infférieure de température est d'au moins 225° C, de préférence d'au moins 227° C.

6. Polyester de poids moléculaire élevé constitué essentiellement des motifs de formule:

$$-\!\!\left( O - X - O - Y \right)\!\!-$$

dont les élémentes X présentent essentiellement la structure:

$X_1$ = 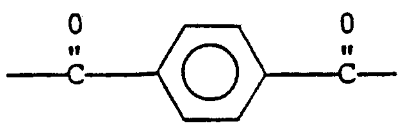 ou $X_2$ = 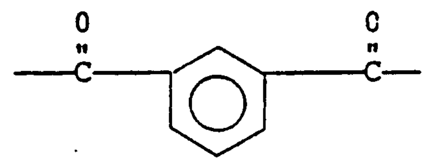

et les éléments Y présentent essentiellement la structure:

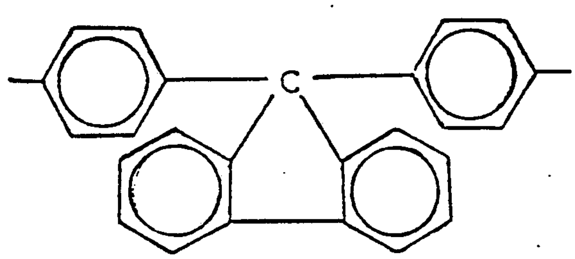

caractérisé en ce que le polyester présente une viscostité inhérente, mesurée à 30° C dans une solution de 0,5 g de polyester dans 100 ml de solvant constitué de 60 % en poids de phénol et 40 % en poids de 1,1,2,2-tétrachloroéthane, supérieure à 1,0 dl/g, de préférence supérieure à 1,2 dl/g et en ce que, pour une viscosité inhérente comprise entre 1,0 et 1,5 dl/g, de 30 à 70 % des éléments X présentent la structure $X_1$ et de 70 à 30 % de ces éléments X présentent la structure $X_2$, et en ce qu'une petite partie des éléments X et/ou Y est constituée par des restes de dérivés polycondensables qui diffèrent des structures $X_1$, $X_2$ et Y.

7. Feuille préparée à partir d'un polyester constitué essentiellement de motifs de formule:

$$-\!\!\left( O - X - O - Y \right)\!\!-$$

dont les éléments X présentent essentiellement les structures:

$X_1$ = 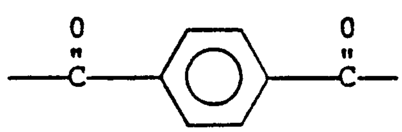 ou $X_2$ = 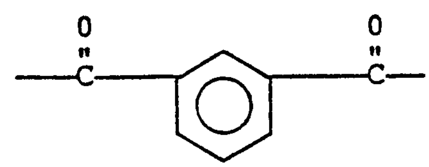

et les éléments Y présentent essentiellement la structure:

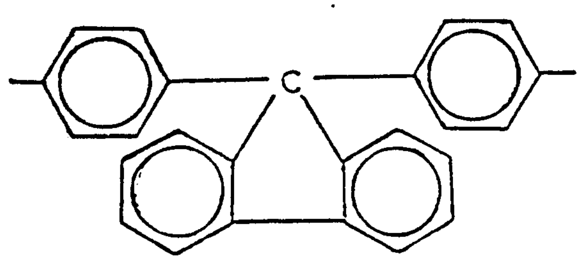

caracérisé en ce que le polyester présente une viscosité inhérente, mesurée à 30°C dans une solution de 0,5 g de polyester dans 100 ml de solvant constitué de 60 % en poids de phénol et 40 % en poids de 1,1,2,2-tétrachloroéthane, supérieure à 1,0 dl/g, de préférence suppérieure à 1,2 dl/g et en ce que, pour une viscosité inhérente comprise entrre 1,0 et 1,5 dl/g, de 30 à 70 % des éléments X présentent la structure $X_1$ et de 70 et 30 % de ces éléments X présentent la structure $X_2$.

8. Feuille selon la revendication 7, caractérisée en ce qu'elle présentent un allongement à la rupture, mesuré selon la norme ASTM D 882-75b, d'au moins 10 %, de préférence d'au moins 20 %.

9. Feuille selon la revendication 7 ou 8, caractérisée en ce que la viscosité inhérente du polyester est supérieure à 1,5 dl/g, de préférence supérieure à 1,8 dl/g.

10. Feuille selon la revendication 9, caractérisée en ce que, dans le polyester, de 30 à 70 % des éléments X présentent la structure $X_1$ et de 70 à 30 % des éléments X présentent la structure $X_2$.

11. Feuille selon l'une quelconque des revendications 7 à 10, caractérisée en ce que, dans le polyester, une petite partie des éléments X et/ou Y est constituée de restes de dérivés polycondensables qui diffèrent des structures X, $X_2$ ou Y.

12. Feuille selon l'une quelconque des revendications 7 à 11, caractérisée en ce qu'elle est préparée à partir de 9,9-bis(4-hydroxyphényl)-fluorène présentant un intervalle de fusion, mesuré selon la méthode de Kofler sur une micro-table chauffante dont la limite inférieure de température est d'au moins 225°C, de préférence d'au moins 227°C.

13. Feuille selon l'une quelconque des revendications 7 à 12, caractérisée en ce qu'elle a une épaisseur comprise entre 0,010 et 0,250 mm et présente un allongement à la rupture, mesuré selon la noe'rme ASTM D 882-75b, d'au moins 16 %, de préférence cependant d'au moins 20%.

14. Feuille selon l'une quelconque des revendications 7 à 13, caractérisée en ce qu'elle présente un indice d'oxygène (oxygène index), mesuré selon la norme ASTM D 2863-77 sur une feullle ayant une épaisséur de 0,125 mm, d'au moins 31 %, de préférence d'au moins 33 %.

15. Feuille selon l'une quelconque des revendications 7 à 14, caractérisée en ce qu'elle est pourvue, au moins sur l'une de ses faces, d'une couche adhésive.

16. Procédé de préparation d'une feuille selon l'une quelconque de revendications 7 à 15, caractérisé en ce qu'il comprend la préparation d'une solution du polyester dans un solvant organique chloré de bas point d'ébullition, le coulage de la solution sur un support en vue de la formation d'un film de solution sur ce support, le séchage de ce film en vue de l'élimination de la plus grande partie du solvant, la séparation du film ainsi séché en feuille par séchage ultérieur en vue de l'élimination de la plus grande partie du solvant résiduel.

17. Conducteur électrique, caractérisé en ce qu'il contient une couche électriquement isolante d'un polyester de la même composition que la feuille selon l'une quelconque des revendications 7 et 9 à 12.